# EUROPÄISCHE PATENTANMELDUNG

(11) **EP 4 717 537 A1**
(43) Veröffentlichungstag der Anmeldung: **01.04.2026**
(21) Anmeldenummer: 25151859.3
(22) Anmeldetag: 14.01.2025
(51) Int. Cl.: B60T 17/04, B61G 5/08

(54) **VENTILBETÄTIGUNGSVORRICHTUNG FÜR EINEN DRUCKLUFTANSCHLUSS AN EINER AUTOMATISCHEN MITTELPUFFERKUPPLUNG**

(30) Priorität: 27.09.2024 DE 102024128133
(71) Anmelder: KB Intellectual Property GmbH & Co. KG, 82049 Pullach (DE)
(72) Erfinder: MÖHLE, Nils, 80809 München (DE)

(57) **Zusammenfassung**

Die Erfindung betrifft eine Ventilbetätigungsvorrichtung für einen Druckluftanschluss (9) einer automatischen Mittelpufferkupplung in Scharfenberg-Bauart, dessen Hauptbolzen (2) eines über einen elektromechanischen Aktuator (8) rückgestellten Herzstücks (3) des Kupplungsmechanismus einen Ventilbetätigungsnocken (11) eines Absperrventils (10) antreibt, um dieses in der gekuppelten Stellung zumindest zu öffnen, wobei zum Offenhalten des Absperrventils (10) im Fehlerfall der Ventilbetätigungsnocken (11) mit einer Freilaufdrehwinkelausnehmung (13) versehen ist, die mit einem Mitnehmerstift (12) des Hauptbolzens (2) zusammenwirkt, um bei ungewollter Zugtrennung eine Notbetätigung der Bremseinrichtung zu gewährleisten.

## Beschreibung

Die vorliegende Erfindung betrifft eine Ventilbetätigungsvorrichtung für einen Druckluftanschluss einer automatischen Mittelpufferkupplung in Scharfenberg-Bauart, deren Hauptbolzen eines über einen elektromechanischen Aktuator oder manuell über einen Betätigungsmechanismus rückgestellten Herzstücks des Kupplungsmechanismus einen Ventilbetätigungsnocken eines Absperrventils einer Bremsluftleitung antreibt, um dieses in der gekuppelten Stellung zumindest zu öffnen.

Das Einsatzgebiet der Erfindung erstreckt sich vornehmlich auf automatische Mittelpufferkupplungen für Züge, insbesondere Güterzüge, welche auf der an sich bekannten Scharfenberg-Bauart basieren, die ein mechanisch automatisches Kuppeln zweier komplementärer Mittelpufferkupplungen benachbarter Wagen eines Zuges gestattet. Zum mechanischen Entkuppeln kommt ein vorzugsweise elektromechanischer Aktuator zum Einsatz, welcher das Herzstück des Kupplungsmechanismus in die kupplungsbereite Stellung verbringt, um die Kupplung automatisch zu öffnen.

Neben diesem mechanischen Kupplungs- und Entkupplungsvorgang sind in Anlageflächen zueinander korrespondierender Mittelpufferkupplungen zueinander korrespondierende abgedichtete Druckluftanschlüsse mindestens einer Bremsleitung vorgesehen, um die Bremsdruckluft entlang des gesamten Zuges zu leiten. Das hier interessierende ebenfalls in der Mittelpufferkupplung integrierte Absperrventil am Druckluftanschluss verhindert nach dem mechanischen Entkuppeln, dass die Bremsdruckluft ungewollt an die Atmosphäre abströmt. Im gekuppelten Zustand miteinander korrespondierender Mittelpufferkupplungen sind die entsprechenden Absperrventile hingegen geöffnet.

### Stand der Technik

Aus der DE 10 2016 104 188 A1 geht eine entsprechende mechanische Ventilbetätigung für ein Absperrventil einer automatischen Mittelpufferkupplung in Scharfenberg-Bauart hervor.

Die Ventilbetätigung erfolgt über den Hauptbolzen des Kupplungsmechanismus, an dem endseitig ein Ventilbetätigungsnocken angebracht ist. Der Ventilbetätigungsnocken weist verschiedene radial hervorspringende Bereiche auf, welche ein Absperrventil durch axiale Betätigung eines entsprechenden Ventilgliedes in vorstehend erläuterter Weise mechanisch steuert, wobei es sich hier im Prinzip um eine spielfreie zwangsgeführte Nockensteuerung handelt.

Problematisch bei einer solchen Nockensteuerung erweist sich die Tatsache, dass das Absperrventil bei einem Versagen der Kupplung, einer Fehlbedienung oder einer unautorisierten Bedienung durch die Zwangsführung in die geschlossene Stellung gelangt, so dass im Falle einer ungewollten Zugtrennung eine Entlüftung der Bremsleitung und damit Notbetätigung der Bremseirichtung unmöglich wird. Dieses Defizit resultierend aus der formschlüssigen Verbindung zwischen Hauptbolzen des Kupplungsmechanismus und Ventilbetätigungsnocken kann nur mit einer zusätzlichen Hilfsbetätigung, wie aus dem Personenverkehr bekannt, kompensiert werden. Durch die geltenden Standards ist dies beim hier interessierenden Einsatzfall im Güterverkehr nicht möglich.

Der Erfindung liegt daher die Aufgabe zugrunde eine gattungsgemäße Ventilbetätigungsvorrichtung für ein Absperrventil bei Güterzügen zu schaffen, welche einen robusten, mechanisch betätigbaren Mechanismus bereitstellt, um im Fehlerfall zu garantieren, dass das Absperrventil nicht schließt und somit bei ungewollter Zugtrennung eine Notbetätigung der Bremseinrichtung zu gewährleisten.

### Kurzbeschreibung der Erfindung

Die Aufgabe wird ausgehend von einer Ventilbetätigungsvorrichtung gemäß dem Oberbegriff von Anspruch 1 in Verbindung mit dessen kennzeichnenden Merkmalen gelöst. Hinsichtlich einer die erfindungsgemäße Ventilbetätigungsvorrichtung umfassenden Mittelpufferkupplung wird auf Anspruch 10 verwiesen.

Die Erfindung schließt die technische Lehre ein, dass zum Offenhalten des Absperrventils im Fehlerfall der Ventilbetätigungsnocken mit einer Freilaufdrehwinkelausnehmung versehen ist, die mit einem Mitnehmerstift des Hauptbolzens zusammenwirkt, um über den so geschaffenen Freilaufdrehwinkel ein zwangsgeführtes Schließen des Absperrventils beim Entkuppeln zu vermeiden.

Mit anderen Worten wird durch die erfindungsgemäße Lösung eine starre formschlüssige Verbindung zwischen Hauptbolzen des Kupplungsmechanismus und Ventilbetätigungsnocken des Absperrventils aufgehoben und es wird stattdessen ein Freilaufdrehwinkel zwischen dem Ventilbetätigungsnocken und dem Hauptbolzen vorgesehen. Hierdurch erfolgt bei Rotation des Hauptbolzens in Kupplungsrichtung, also beim mechanischen Schließen der Kupplung, eine unmittelbare zwangsweise Betätigung des Ventilbetätigungsnockens in Öffnungsrichtung des Absperrventils. Dies stellt sicher, dass kein mechanisches Kuppeln erfolgen kann, ohne dass das Absperrventil hierbei geöffnet wird. In Richtung des Entkuppelns wirkt dagegen der Freilaufdrehwinkel, indem keine unmittelbare Mitnahme des Ventilbetätigungsnockens in Gegenrichtung erfolgt; die verbundenen Kupplungen werden lediglich mechanisch entkuppelt. Ein Schließen des Absperrventils kann nur über eine separate Betätigung und nur nach bereits erfolgtem mechanischem Entkuppeln durchgeführt werden.

Vorzugweise erstreckt sich die Freilaufdrehwinkelausnehmung des Ventilbetätigungsnockens über einen Drehwinkel von zumindest 60 Grad. Über diese Winkelspanne lässt sich das vorstehend erläuterte Entkuppeln der mechanischen Kupplung vom Schließen des Absperrventils trennen.

Gemäß einer weiteren die Erfindung verbessernden Maßnahme wird vorgeschlagen, dass das Absperrventil beim Kuppeln durch Anlage des Mitnehmerstifts an einem ersten Freilaufanschlag der Freilaufdrehwinkelausnehmung in die geöffnete Stellung überführbar ist.

Zum Überführen des Absperrventils in die geschlossene Stellung ist es denkbar, dass dies durch Anlage des Mitnehmerstifts an einem zweiten Freilaufanschlag der Freilaufdrehwinkelanordnung durchgeführt werden kann, welcher dem ersten Freilaufanschlag gegenüberliegt. Ausgelöst wird dies durch eine entsprechende Drehung des Hauptbolzens in Gegenrichtung.

Alternativ hierzu ist es jedoch auch denkbar, dass die Überführung in die geschlossene Stellung des Absperrventils über separate, vom Herzstück und dem Hauptbolzen unabhängige manuelle Betätigungsmittel erfolgen kann. Hierzu können mechanische Betätigungsmittel, beispielsweise Seilzug- oder Gestängemittel verwendet werden. Der Zugang zu solchen separaten Betätigungsmitteln kann beispielsweise durch eine codierte Bedienung per Schlüssel, Spezialwerkzeug oder dergleichen gesichert werden, um eine unautorisierte Bedienung zu vermeiden.

Gemäß einer weiteren die Erfindung verbessernden Maßnahme kann die Überführung des Absperrventils in die geschlossene Stellung auch über einen elektromechanischen, pneumatischen oder hydraulischen Aktuator erfolgen, der simultan auch das Herzstück in die Entkupplungsstellung drückt. Ist eine simultane Betätigung nicht erwünscht, beispielsweise weil ein einzelner Aktuator nicht auf Sicherheitslevel SIL-4 angesteuert ist, so können auch getrennte Aktuatoren einerseits für den mechanischen Entkupplungsvorgang und andererseits für das Schließen des Absperrventils vorgesehen werden. Eine solche Betätigung über Aktuatoren kann beispielsweise über einen Betätigungsnocken erfolgen, der in den Kuppelkopf hineinragt. Die alternative Betätigung über getrennte Aktuatoren kann beispielsweise auch für Zwecke einer automatischen Bremsprobe genutzt werden. Somit können also die einzelnen Aktuatoren unabhängig voneinander angesteuert werden, um diese gleichzeitig oder zeitlich gestaffelt zueinander zu betätigen. Durch die separate Ansteuerung steigt die Fehlertoleranz, da durch einen Einzelfehler der Aktorik nicht beide Funktionen ausgelöst werden können und damit immer ein kritischer Zustand verhindert wird.

Das im Rahmen der erfindungsgemäßen Lösung zum Einsatz kommende Absperrventil ist vorzugsweise nach Art eines federrückgestellten Sitzventils ausgebildet.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Längsschnittdarstellung einer automatischen Mittelpufferkupplung in Scharfenberg-Bauart,
- Fig. 2: eine aufgebrochen perspektivische Darstellung von kupplungsinternen Komponenten der Mittelpufferkupplung nach Fig. 1,
- Fig. 3a-c: mehrere Detaildarstellungen verschiedener Schaltzustände von Fig. 2, und
- Fig. 4: einen Längsschnitt durch kupplungsinterne Komponenten der Figuren 3a bis 3c.

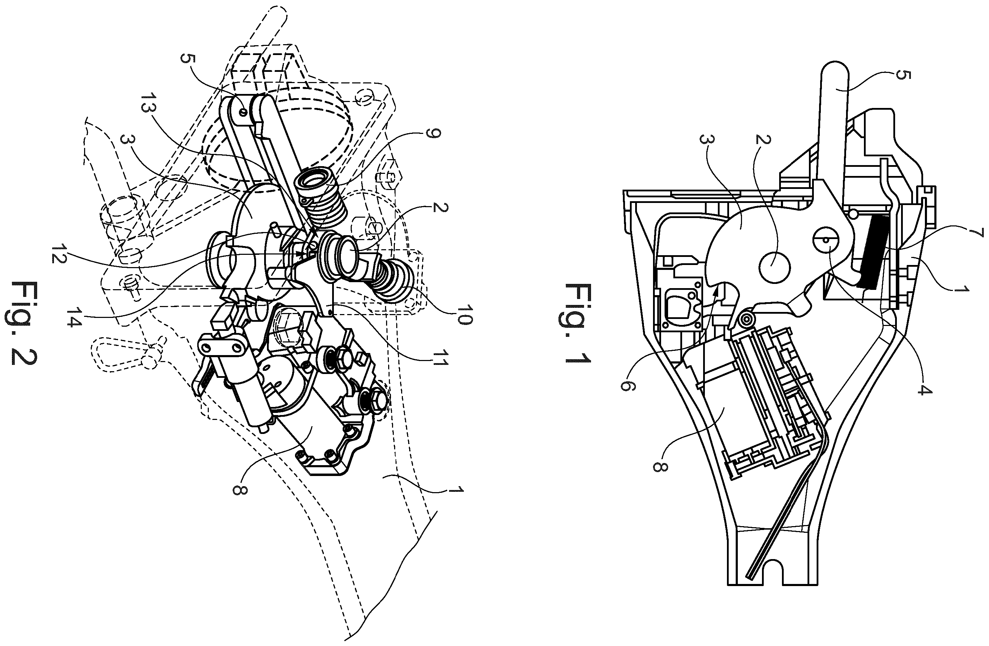

Gemäß Figur 1 umfasst eine als automatische Mittelpufferkupplung für Güterzüge konzipierte - an sich bekannte - Scharfenbergkupplung einen in einem Kupplungsgehäuse 1 eines Kupplungskopfes angeordneten Hauptbolzen 2, auf dem ein so genanntes Herzstück 3 in Form einer Hakenscheibe schwenkbar angeordnet ist. Das Herzstück 3 trägt einen Kuppelösenbolzen 4, woran eine so genannte Kuppelöse 5 zur Betätigung einer - nicht weiter dargestellten - Gegenkupplung angelenkt ist. In dem Herzstück 3 ist ein so genanntes Hakenmaul 6 ausgebildet, wobei die Mittelachse eines Rundungsabschnitts des Hakenmauls um 180 Grad versetzt auf dem gleichen Radius wie der Kuppelösenbolzen 4 liegt, um die Kupplungsfunktion zu gewährleisten. Eine Zugfeder 7 zieht das Herzstück 3 gegen eine im Kupplungsgehäuse 1 ausgebildete Anschlagfläche in eine kuppelbereite Stellung.

Zum Einkuppeln treffen die Kuppelösen 5 einander komplementär gegenüberliegender Kupplungen auf die jeweiligen Herzstücke 3, die sich in die eingekuppelte Stellung entgegen der Kraft der Zugfeder 7 verdrehen, wodurch die Kuppelösen 5 in das entsprechende Hakenmaul 6 des Herzstücks 3 gleiten. Dieser Kupplungsvorgang erfolgt mit einer schnellen schnappenden Bewegung.

Zum Entkuppeln kommt bei diesem Ausführungsbeispiel dagegen ein elektromechanischer Aktuator 8 zum Einsatz. Der Aktuator 8 liefert eine lineare Stellbewegung zur Betätigung des Herzstücks 3.

Gemäß Fig. 2 umfasst die Mittelpufferkupplung daneben einen frontseitigen Druckluftanschluss 9 zur Verkettung einer zugweiten Bremsluftleitung, welcher mit einem ebenfalls im Kupplungsgehäuse 1 integrierten Absperrventil 10 zwischen einer geöffneten und einer gesperrten Stellung schaltbar ist. Hierzu wird das Absperrventil 10 über einen Ventilbetätigungsnocken 11 angesteuert, welcher am Hauptbolzen 2 drehbar gelagert ist. Die Verstellung des Ventilbetätigungsnockens 11 erfolgt über einen am Hauptbolzen 2 angeordneten Mitnehmerstift 12, der mit einer Freilaufdrehwinkelausnehmung 13 des Ventilbetätigungsnockens 11 zusammenwirkt. Die Freilaufdrehwinkelanordnung 13 erstreckt sich bei diesem Ausführungsbeispiel über einen Drehwinkel von ca. 90 Grad.

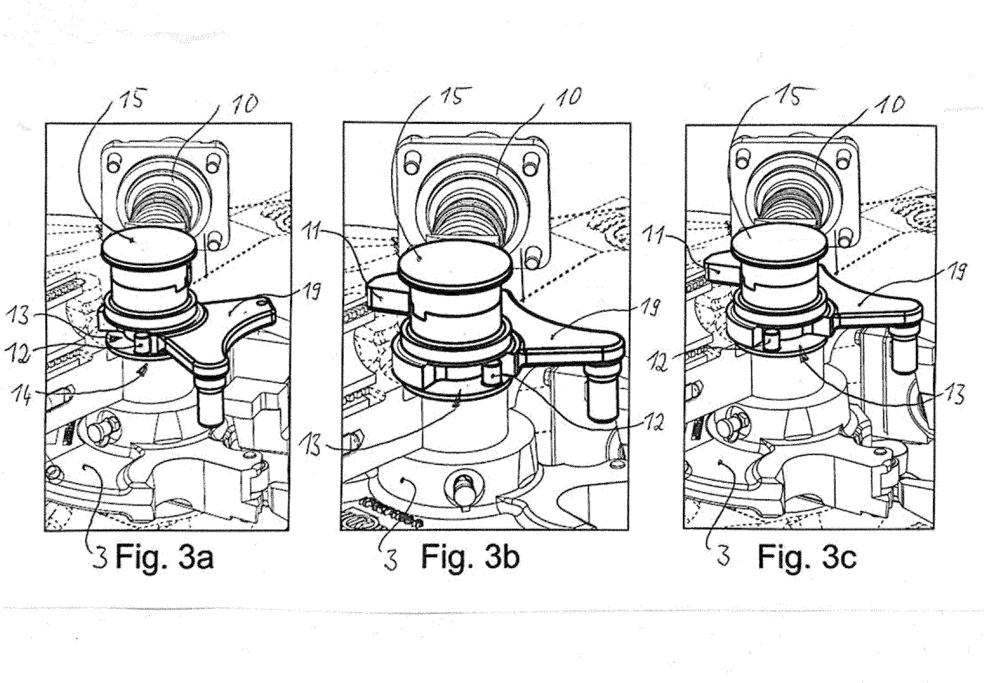

Wie detaillierter aus Fig. 3a hervorgeht, ist eine mit dem - in dieser Ansicht verdeckten - Ventilbetätigungsnocken ausgebildete Betätigungshülse 15 schwenkbar im - hier nicht dargestellten - Ventilgehäuse gelagert, also nicht am Hauptbolzen 2 des Kupplungsmechanismus. Der Kupplungsmechanismus mit Herzstück 3 befindet sich in der entkuppelten und kuppelbereiten Ausgangsstellung, wobei das Absperrventil 10 durch Anlage des Mitnehmerstifts 12 an einen ersten Freilaufanschlag 14 der Freilaufdrehwinkelausnehmung 13 in der geschlossenen Stellung ist. Der Ventilbetätigungsnocken ist an einer Betätigungshülse 15 ausgebildet ist, welche im Ventilgehäuse per Gleitlagerung schwenkbar gelagert ist. An der Betätigungshülse 15 ist ferner ein Schwenkhebel 19 ausgebildet, mit welchem die Betätigungshülse 15 beispielsweise mittels eines - nicht weiter dartgestellten - zusätzlichen Aktuators oder manuell verstellbar ist.

Die Fig. 3b illustriert den gekuppelten Zustand des Kupplungsmechanismus, der durch eine entsprechende Winkelverstellung des Herzstücks 3 gekennzeichnet ist. In dieser Stellung ist der - hier sichtbare - Ventilbetätigungsnocken 11 durch den Mitnehmerstift 12 synchron mitverstellt worden, so dass das Absperrventil 10 geöffnet wurde.

Nach Fig. 3c befindet sich der Kupplungsmechanismus wieder im entkuppelten Zustand, wobei die Freilaufdrehwinkelausnehmung 13 in Funktion kommt. Hierbei schwenkt das Herzstück 3 wieder zurück, wobei das Absperrventil 10 allerdings nicht betätigt wird, also in seiner geöffneten Stellung verharrt. Durch das zwangsweise Offenhalten wird sichergestellt, dass das Absperrventil 10 in einem Fehlerfall nicht schließt, um insbesondere bei ungewolltem Entkuppeln eine Notbetätigung der Bremseinrichtung zu gewährleisten.

Erst nach dem Entkuppeln wird das Absperrventil 10 durch eine über separate Betätigungsmittel ausgeführte Drehung des Schwenkhebels 19 im Stillstand des Hauptbolzens 2 wieder in die geschlossene Stellung überführt.

Als separate Betätigungsmittel können beispielsweise manuelle Betätigungsmittel in Form von Seilzug- oder Gestängebetätigungen oder auch automatische Betätigungsmittel, beispielsweise durch Einsatz des elektromechanischen Aktuators 8 oder eines zusätzlichen Aktuators wie bereits vorstehend allgemein beschrieben in Betracht kommen.

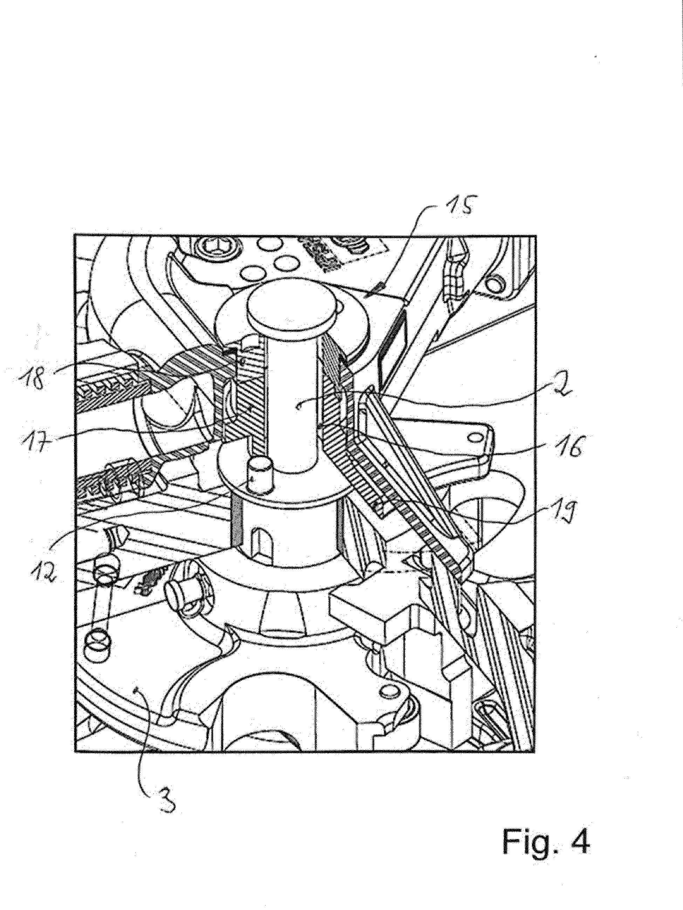

Gemäß Fig. 4 umgibt die Betätigungshülse 15 das distale Ende des Hauptbolzens 2, wobei dazwischen ein vertikaler Bewegungsspalt 16 ausgebildet ist. Die Betätigungshülse 15 ist aus einem unteren Hülsenteil 17 und einem koaxialen oberen Hülsenteil 18 zusammengesetzt, welche formschlüssig drehfest miteinander zusammenwirken.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass ein separater elektromechanischer Aktuator allein für das Schließen des Absperrventils eingesetzt wird. Daneben ist es auch denkbar, dass der herkömmliche Aktuator, welcher in erster Linie dem Entkuppeln dient, auch zum Schließen des Absperrventils eingesetzt wird, wobei zur Erzielung eines höheren Sicherheitslevels ein solcher funktionsintegrierter Aktuator auch redundant ausgeführt werden kann. Eine manuelle Betätigung, optional auch nur hilfsweise, ist ebenfalls denkbar. Ferner kann der Bewegungsspalt zwischen Hauptbolzen und Betätigungshülse bei entsprechender konstruktiver Anpassung der benachbarten Bauteile auch horizontalverlaufend ausgebildet sein.

### BEZUGSZEICHENLISTE

- 1: Kupplungsgehäuse
- 2: Hauptbolzen
- 3: Herzstück
- 4: Kuppelösenbolzen
- 5: Kuppelöse
- 6: Hakenmaul
- 7: Zugfeder
- 8: Aktuator
- 9: Druckluftanschluss
- 10: Absperrventil
- 11: Ventilbetätigungsnocken
- 12: Mitnehmerstift
- 13: Freilaufdrehwinkelausnehmung
- 14: Freilaufanschlag
- 15: Betätigungshülse
- 16: Bewegungsspalt
- 17: unteres Hülsenteil
- 18: oberes Hülsenteil
- 19: Schwenkhebel

## Patentansprüche

1. Ventilbetätigungsvorrichtung für einen Druckluftanschluss (9) einer automatischen Mittelpufferkupplung in Scharfenberg-Bauart, deren Hauptbolzen (2) eines über einen elektromechanischen Aktuator (8) oder manuell über einen Betätigungsmechanismus rückgestellten Herzstücks (3) des Kupplungsmechanismus einen Ventilbetätigungsnocken (11) eines Absperrventils (10) einer Bremsluftleitung antreibt, um dieses in der gekuppelten Stellung zumindest zu öffnen,
**dadurch gekennzeichnet, dass** zum Offenhalten des Absperrventils (10) im Fehlerfall der Ventilbetätigungsnocken (11) mit einer Freilaufdrehwinkelausnehmung (13) versehen ist, die mit einem Mitnehmerstift (12) des Hauptbolzens (2) zusammenwirkt, um bei ungewolltem Entkuppeln eine Notbetätigung der Bremseinrichtung zu gewährleisten.

2. Ventilbetätigungsvorrichtung nach Anspruch 1,
**dadurch gekennzeichnet, dass** sich die Freilaufdrehwinkelausnehmung (13) über einen Drehwinkel von mindestens 60 Grad erstreckt.

3. Ventilbetätigungsvorrichtung nach Anspruch 1,
**dadurch gekennzeichnet, dass** das Absperrventil (10) beim Kuppeln durch Anlage des Mitnehmerstifts (12) an einem ersten Freilaufanschlag (14) der Freilaufdrehwinkelausnehmung (13) in die geöffnete Stellung überführbar ist.

4. Ventilbetätigungsvorrichtung nach Anspruch 1,
**dadurch gekennzeichnet, dass** das Absperrventil (10) nach dem Entkuppeln erst durch externe Betätigung des Ventilbetätigungsnockens (11) in die geschlossene Stellung überführbar ist.

5. Ventilbetätigungsvorrichtung nach Anspruch 4,
**dadurch gekennzeichnet, dass** die Überführung in die geschlossene Stellung des Absperrventils (10) über seperate, von Herzstück (3) mit Hauptbolzen (2) unabhängige manuelle Betätigungsmittel erfolgt.

6. Ventilbetätigungsvorrichtung nach Anspruch 5,
**dadurch gekennzeichnet, dass** die manuellen Betätigungsmittel als Seilzug- oder Gestängebetätigung ausgebildet sind.

7. Ventilbetätigungsvorrichtung nach Anspruch 1,
**dadurch gekennzeichnet, dass** die Überführung in die geschlossene Stellung des Absperrventils (10) über den elektromechanischen Aktuator (8) erfolgt, der simultan auch das Herzstück (3) in die Entkupplungsstellung drückt.

8. Ventilbetätigungsvorrichtung nach Anspruch 1,
**dadurch gekennzeichnet, dass** neben dem elektromechanischen Aktuator (8) ein weiterer elektromechanischer Aktuator zur Ventilbetätigung vorgesehen ist.

9. Ventilbetätigungsvorrichtung nach einem der vorstehenden Ansprüche,
**dadurch gekennzeichnet, dass** das Absperrventil (10) nach Art eines federrückgestellten Sitzventils ausgebildet ist.

10. Ventilbetätigungsvorrichtung nach einem der vorstehenden Ansprüche,
**dadurch gekennzeichnet, dass** der Ventilbetätigungsnocken (11) an einer Betätigungshülse (15) ausgebildet ist, welche im Ventilgehäuse des Absperrventils (10) schwenkbar gelagert ist.

11. Ventilbetätigungsvorrichtung nach einem der vorstehenden Ansprüche,
**dadurch gekennzeichnet, dass** die Betätigungshülse (15) das distale Ende des Hauptbolzens (2) koaxial umgibt, wobei dazwischen ein Bewegungsspalt (16) ausgebildet ist.

12. Ventilbetätigungsvorrichtung nach Anspruch 11,
**dadurch gekennzeichnet, dass** die Betätigungshülse (15) aus einem unteren Hülsenteil (17) und einem koaxialen oberen Hülsenteil (18) zusammengesetzt ist, welche formschlüssig drehfest miteinander zusammenwirken.

13. Automatische Mittelpufferkupplung in Scharfenberg-Bauart für Güterzüge, umfassend eine Ventilbetätigungsvorrichtung nach einem der vorstehenden Ansprüche.
